# EUROPEAN PATENT APPLICATION

(11) **EP 4 671 158 A1**
(43) Date of publication of application: **31.12.2025**
(21) Application number: 25184552.5
(22) Date of filing: 23.06.2025
(51) Int. Cl.: B65G 1/127, G01N 35/04

(54) **SPECIMEN PROCESSING APPARATUS AND SPECIMEN STORAGE METHOD**

(30) Priority: 28.06.2024 JP 2024105016
(71) Applicant: Aoi Seiki Co., Ltd., Kumamoto-shi, Kumamoto-ken 861-8038 (JP)
(72) Inventor: ITOH, Teruaki, Kumamoto-shi, 861-8038 (JP)
(74) Representative: van Dam, Vincent

(57) **Abstract**

A storage apparatus according to an embodiment includes a conveying device, the conveying device comprising; a feeding member that moves along a predetermined circulation path having a forward path and a backward path; a plurality of support arms supported by the feeding member; and a plurality of racks rotatably supported by the support arms and capable of holding a specimen.

## Description

### FIELD

The present invention relates generally to a specimen processing apparatus and a specimen storage method.

### BACKGROUND

A storage shelf that holds a specimen capable of storing a specimen such as blood in an upright state has been known (Jpn. Pat. Appln. KOKAI Publication **No.** 2013-238486 A). For example, a plurality of racks for holding specimens in a plurality of rows in two vertical and horizontal directions are arranged in a plurality of stages in the height direction. In such a configuration, when the specimens are installed and stored in the racks of the stages, the specimen is moved on an upper portion of the rack provided on each stage floor and inserted into a holding hole at a predetermined position of the rack. Therefore, it is necessary to horizontally move a transfer arm in an upper portion of the rack on each floor, and a space where the transfer arm moves and a space for taking in and out the specimen are required on all the floors. Therefore, the plurality of floors arranged in the vertical direction need to be installed at a distance in a vertical direction, and a height of the entire device increases. A configuration in which a plurality of racks is moved up and down in a housing has also been known.

### SUMMARY

A storage apparatus according to an embodiment comprises a conveying device, the conveying device comprising; a feeding member that moves along a predetermined circulation path having a forward path and a backward path;
a plurality of support arms supported by the feeding member; and
a plurality of racks rotatably supported by the support arms and capable of holding a specimen.

### BRIEF DESCRIPTION OF THE DRAWINGS

FIG. 1 is a perspective view of a specimen processing apparatus according to a first embodiment of the present invention.
FIG. 2 is a side view of a storage apparatus according to the embodiment.
FIG. 3 is a perspective view illustrating a part of the storage apparatus according to the embodiment.
FIG. 4 is a perspective view illustrating a configuration of a part of the storage apparatus according to the embodiment.
FIG. 5 is a perspective view illustrating a configuration of a part of the storage apparatus according to the embodiment.
FIG. 6 is a perspective view illustrating a configuration of a part of the storage apparatus according to the embodiment.
FIG. 7 is a perspective view illustrating a configuration of a part of the storage apparatus according to the embodiment.
FIG. 8 is a perspective view of a rack according to the embodiment.
FIG. 9 is an explanatory view illustrating an operation of the storage apparatus according to the embodiment.
FIG. 10 is an explanatory view illustrating the operation of the storage apparatus according to the embodiment.
FIG. 11 is an explanatory view illustrating the operation of the storage apparatus according to the embodiment.
FIG. 12 is an explanatory view illustrating the operation of the storage apparatus according to the embodiment.
FIG. 13 is an explanatory view illustrating the operation of the storage apparatus according to the embodiment.
FIG. 14 is an explanatory view illustrating the operation of the storage apparatus according to the embodiment.

### DETAILED DESCRIPTION

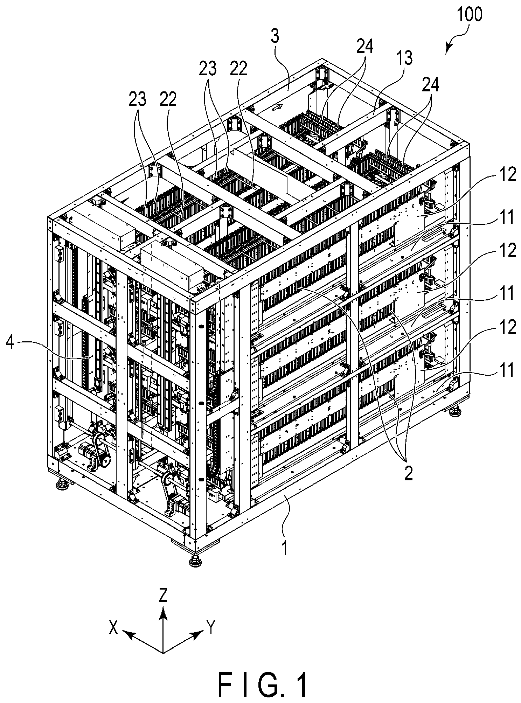

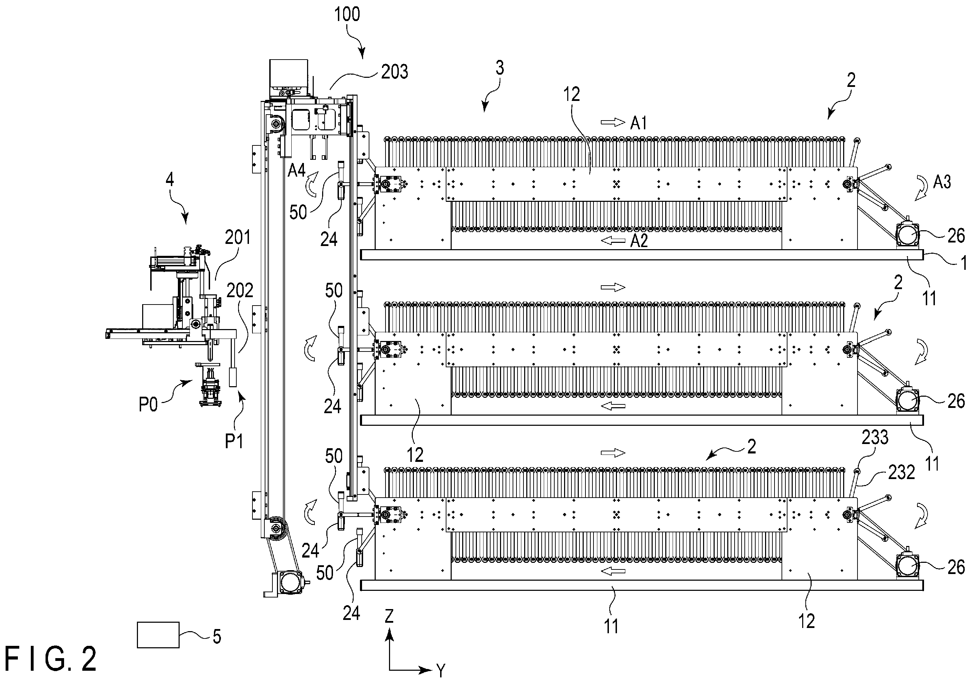

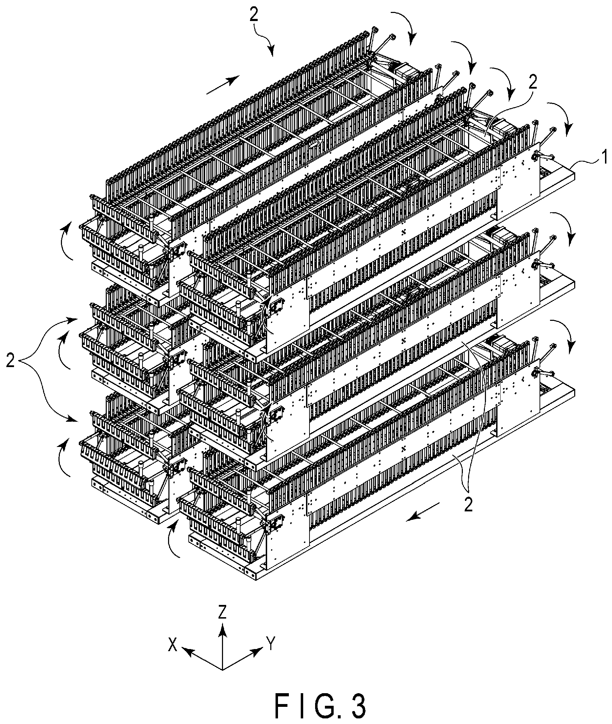

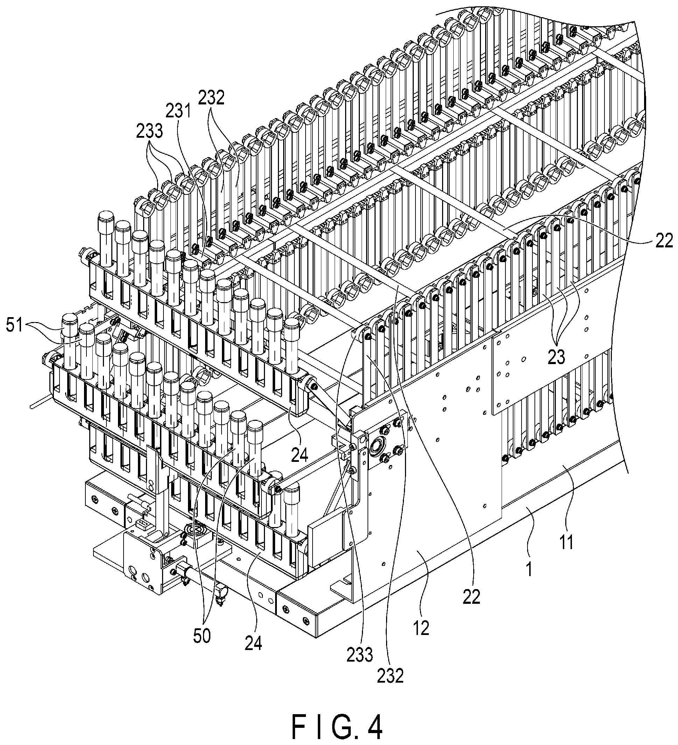

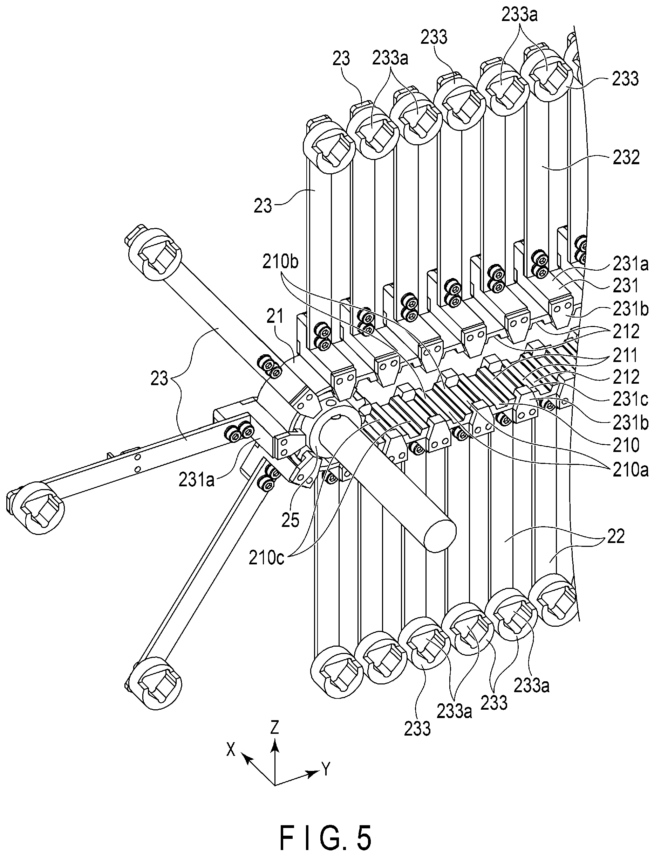

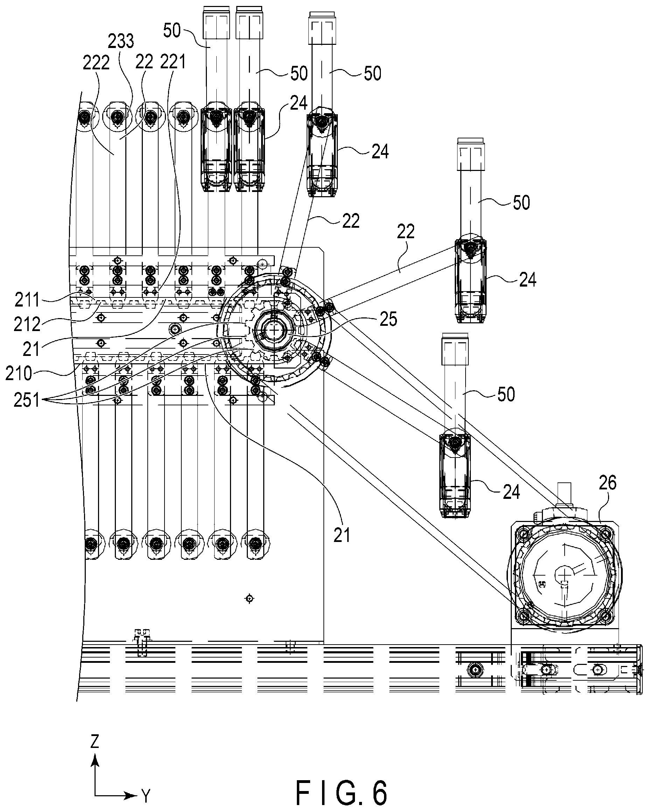

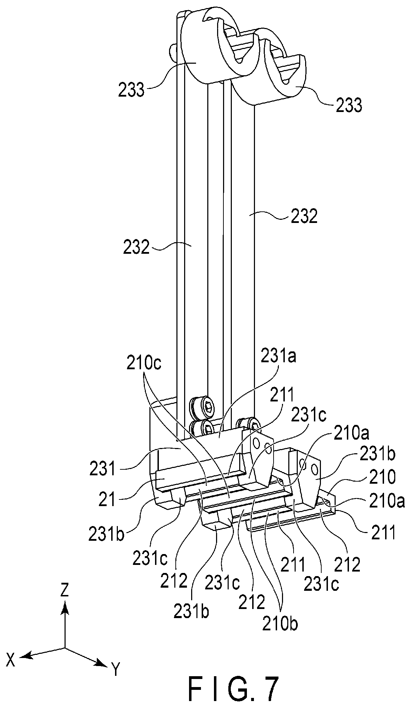

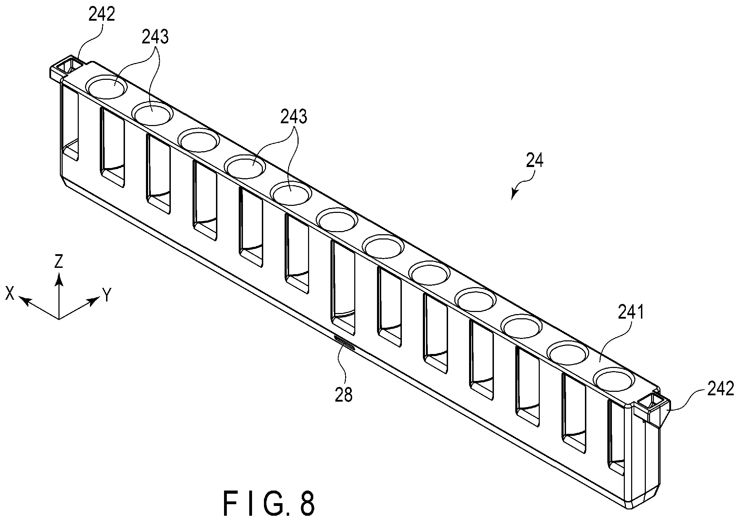

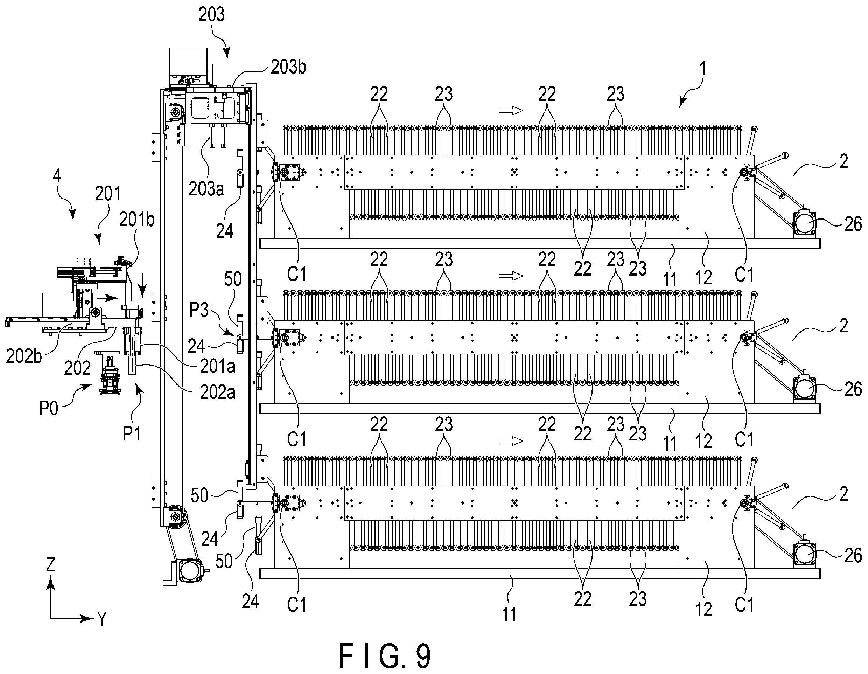

Hereinafter, a storage apparatus and a storage method according to an embodiment of the present invention will be described with reference to FIGS. 1 to 14. FIG. 1 is a perspective view of a specimen processing apparatus according to a first embodiment, and FIG. 2 is a side view of a storage apparatus. FIGS. 3 to 7 are perspective views illustrating a part of the storage apparatus, and FIG. 7 is a perspective view of a rack. FIGS. 9 to 14 are explanatory diagrams illustrating an operation of the storage apparatus. In the drawing, X, Y, and Z indicate three directions orthogonal to each other. A width direction of the apparatus is defined as a first direction (X direction), a front-back direction is defined as a second direction (Y direction), and a height direction is defined as a third direction (Z direction). Note that, in each drawing, the configuration is appropriately enlarged, reduced, or omitted for description.

The storage apparatus (specimen processing apparatus) 100 includes a housing 1, a plurality of conveying devices 2 disposed in the housing 1, a transfer device 4, and a control unit 5.

The housing 1 includes, for example, a base frame 11 disposed below a circulation path A in each of the conveying devices 2, a pair of side frames 12 erected on both sides in the width direction which is the first direction, and a plurality of outer frames 13. The housing 1 forms a rectangular parallelepiped accommodation space in which the racks 24 can be arranged in a plurality of stages by the outer frame 13. In the accommodation space, the plurality of conveying devices 2 is arranged in parallel in the vertical direction and the width direction. The housing 1 has an opening capable of performing transfer processing at least at a transfer position on one side in the second direction. As an example, in the present embodiment, an example in which the transfer position is disposed at a rear end portion will be described.

Each conveying device 2 holds and transports a specimen container 50 (specimen) along the predetermined circulation path A set in the housing 1.

In the present embodiment, as illustrated in FIG. 2, an example in which a total of six conveying devices 2 are arranged in three stages in the vertical direction and two rows in the width direction in an accommodation space is illustrated as an example. For example, the number of the conveying devices 2 and the number of the transfer devices 4 are not limited thereto, and can be appropriately changed.

Each conveying device 2 includes a pair of feeding members 21 that circulates and moves along the predetermined circulation path A, a connecting rod 22 that connects the pair of feeding members 21, a plurality of support arms 23 provided in each feeding member 21, a plurality of racks 24 that are rotatably connected to the support arms 23 and hold a plurality of specimen containers 50, a feed roller 25, and a drive unit 26. The circulation path A includes, for example, a forward path and a backward path arranged vertically along the second direction, and a hoistway connecting the forward path and the backward path at an end in the second direction.

For example, in the circulation path A, a forward path A1 for moving the rack forward is arranged in an upper stage, a backward path A2 for moving the rack backward is arranged in a lower stage, an arc-shaped downward path A3 connecting the forward path and the backward path is arranged in a front end portion, and an arc-shaped upward path A4 connecting the backward path and the forward path is arranged in a rear end portion. That is, in each conveying device 2, two stages of lanes are formed vertically, the upper stage configures a lane for forward movement from the rear portion toward the front, and the lower stage configures a lane for backward movement from the front toward the rear. Note that the upper and lower lanes and the front-rear moving directions may be reversed.

The feeding member 21 is, for example, a belt member or a chain member. For example, the feeding member 21 is an endless belt that moves along the loop-shaped circulation path A having the forward path and the backward path along the front-back direction (second direction). The feeding member 21 is provided along the loop-shaped circulation path A connected by the forward path and the backward path extending in the front-rear direction and arc-shaped connection paths connecting the forward path and the backward path at a front end and a rear end. The circulation path A is disposed in the accommodation space.

Each feeding member 21 is provided on both sides in the width direction of each conveying device 2. For example, a pair of feeding members 21 is disposed inside the side frame 12 and connected to each other by the plurality of connecting rods 22. That is, as an example, in the present embodiment, in the three sets of conveying devices 2, the plurality of feeding members 21 is provided in the front-rear direction on both the left and right sides.

The feeding member 21 is looped to support the plurality of racks 24. The feeding member 21 are fed in a predetermined circulation direction by the rotation of the feed roller 25 to convey the rack 24 connected via the support arm 23 at a predetermined timing.

Each feeding member 21 has an uneven surface in which a plurality of engagement teeth 211 as convex portions and a plurality of engagement grooves 212 as concave portions are alternately formed. As an example, the feeding member 21 is, for example, a timing belt 210, has a predetermined width dimension, and formed with the engagement teeth 211 and the engagement grooves 212 at a predetermined pitch in the longitudinal direction on the back surface on the inner side of the loop.

The timing belt 210 has a base surface 210a configuring a bottom portion of the engagement groove 212, a top surface 210b positioned more inward of the loop than the base surface 210a and configuring a top portion of the engagement tooth 211, and an inclined surface 210c connecting the base surface 210a and both sides of the top surface 210b, on a back surface on an inner side of the loop. For example, the inclined surface 210c is inclined by 45 degrees with respect to the base surface 210a and the top surface 210b.

The engagement teeth 211 have a trapezoidal shape in a cross-sectional view, and are ridges extending along the width direction of the timing belt 210.

The engagement groove 212 is a groove formed in a trapezoidal shape expanding toward the inside of the loop in a cross-sectional view and extending along the width direction of the timing belt 210. The inner surface of the engagement groove 212 follows the outer shape of a part of an engagement protrusion 231c of the support arm 23.

In the feeding member 21 configured as described above, the uneven surface on the back side meshes with an outer peripheral surface of the feed roller 25 and is engaged so that power can be transmitted. In the feeding member 21, some of the engagement grooves 212 are engaged with the engagement projections 231c of the support arms 23, and the plurality of support arms 23 are connected to the feeding member 21 at a predetermined pitch in the longitudinal direction.

The connecting rod 22 connects the pair of feeding members 21 disposed apart from each other in the X direction. For example, the connecting rod 22 is a shaft member extending in the X direction. For example, the connecting rod 22 is fixed for positioning and reinforcing the pair of side frames 12.

The support arm 23 includes a bracket 231 fixed to the feeding member 21, an arm piece 232, and a rotating holder 233 provided at a distal end of the arm piece 232.

The bracket 231 includes a support piece 231a disposed on the outer surface side of the feeding member 21, and a pair of engagement pieces 231b extending from both ends of the support piece 231a in the width direction of the feeding member 21 toward the back side of the feeding member 21.

The support piece 231a is formed in, for example, a plate shape extending in the width direction of the feeding member 21. The support piece 231a is fixed to the outer surface of the feeding member 21. The support piece 231a supports the proximal end portion of the arm piece 232. For example, the support piece 231a has a support surface orthogonal to the width direction of the feeding member 21, and the arm piece 232 is arranged to face the support surface and is fastened by a fastening member.

The pair of engagement pieces 231b is disposed on both sides of the feeding member 21 in the width direction. Each of the pair of engagement pieces 231b includes an engagement protrusion 231c that extends toward the back side of the feeding member 21 and protrudes inward in the width direction on the back side of the feeding member 21. The engagement protrusion 231c is disposed in the engagement groove 212 on the back surface of the feeding member 21 and engages with the feeding member 21. In the engagement protrusion 231c, at least a part of the outer shape of the cross section orthogonal to the width direction of the feeding member 21 is formed in a trapezoidal shape, and is formed in a rectangular shape along the shape of the engagement groove 212. For example, the engagement protrusion 231c has a hexagonal shape. The bracket 231 is fixed to the feeding member 21 by sandwiching the feeding member 21 between the pair of engagement pieces 231b and being fastened by fastening members such as screws at a plurality of positions.

The arm piece 232 is formed in a plate shape elongated in one direction, and extends toward the outside of the loop of the feeding member 21. One end side of the arm piece 232 is screwed and fixed to the bracket 231. A rotating holder 233 is connected to the other end side of the arm piece 232 so as to be rotatable about an axis in the X direction.

For example, the plurality of arm pieces 232 extends upward in the forward path, extends downward in the backward path, and radially extends along the radial direction of the circle in the connection path at the front and rear ends. The arm piece 232 is configured such that the length from the support portion to the base end portion in the longitudinal direction is larger than the height dimension of the rack 24.

That is, the arm piece 232 linearly moves in the first direction from the rear to the front in a posture in which the distal end faces upward in the upper lane of the circulation path A. In addition, the arm piece 232 linearly moves from the front to the back in a posture in which the distal end faces downward in a collection lane on the lower side of the circulation path A. In addition, the arm piece 232 rotates about the axis in the X direction at the front end portion of the circulation path A such that the distal end portion moves from the upper side to the lower side through the front side. At the rear end of the circulation path A, the arm piece 232 rotates about the axis in the X direction such that the distal end portion moves upward from the bottom through the rear.

The rotating holder 233 is rotatably attached to the distal end portion of the arm piece 232 via a bearing. The rotating holder 233 has rack support groove 233a as a rack support portion engageable with engagement protrusions 242 at both ends of the rack 24. The support groove 233a has a V-shaped receiving portion that opens upward. The rotating holder 233 is maintained in an upward posture in which the bottom side of the V-shaped receiving portion faces downward and the opening side faces upward by, for example, a weight or the like. The engagement protrusion 242 of the rack 24 is disposed in the rack support groove 233a of the rotating holder 233, in such a way that the rack 24 is rotatably supported with respect to the distal end portion of the support arm 23.

The racks 24 are arranged in a plurality of rows in the front-rear direction in the accommodation space, and hold one or a plurality of specimen containers 50. For example, in the present embodiment, the rack 24 is a holding container that holds a plurality of specimen containers 50 arranged in one direction. The rack 24 holds five or more specimen containers 50 in the first direction and two or less rows in the second direction, and in the present embodiment, the specimen containers 50 are held and moved in each of 12 rows in the width direction. For example, the rack 24 integrally includes a rack base 241 formed in a block shape from a resin material or the like, and engagement protrusions 242 as engagement portions formed on both end surfaces of the rack base 241.

The rack base 241 has a plurality of cylindrical accommodation holes 243 into which the bottom portion of the specimen container 50 is inserted. For example, the rack base 241 has 12 accommodation holes 243 for accommodating 12 specimen containers in one row in the X direction. A plurality of specimen containers disposed along at least the first direction can be held.

The rack base 241 may be provided with a weight for stabilizing a posture in which the bottom portion is located below. An IC tag 28 such as an RFID tag is attached to the rack base 241.

The engagement protrusions 242 are formed at both ends in the longitudinal direction of the rack base 241. For example, the engagement protrusion 242 protrudes in the width direction of the device, which is the longitudinal direction of the rack base 241, and engages with the support groove 233a of the rotating holder 233. The pair of engagement protrusions 242 protrudes in a width direction orthogonal to or intersecting with the front-rear direction and the height direction which are the movement direction. For example, the engagement protrusion 242 has a V-shaped guide portion protruding downward. The guide portion is locked to the rack support groove 233a which is a V-shaped groove opened upward and held by the support arm 23, whereby the plurality of racks 24 is held by the feeding member 21 at a predetermined pitch.

The feed roller 25 is disposed on the back side of the feeding member 21. For example, the feed roller 25 is formed in a gear shape having a plurality of engagement teeth 251 on the outer peripheral surface. The feed roller 25 is driven by the drive unit 26 to rotate about an axis in the X direction. The engagement tooth 251 of the feed roller 25 is engaged with the engagement groove 212, so that the feed roller 25 is configured to be capable of transmitting power in the longitudinal direction of the feeding member 21, and the feeding member 21 is fed in a predetermined conveyance direction by the rotational operation of the feed roller 25.

The drive unit 26 includes a drive source such as a servo motor or a stepping motor. In the present embodiment, as an example, the drive unit 26 includes, for example, a pulse motor, and is controlled by the control unit 5 to rotationally drive the feed roller 25 at a predetermined timing to feed and move the feeding member 21 in a predetermined feeding direction. The drive unit 26 can move a specific rack 24 to a specific location by controlling the rotation in addition to the feeding operation for each rack 24.

The specimen container 50 is, for example, a blood collection tube formed in a tubular shape from transparent glass or the like, has a cylindrical shape having a columnar space for accommodating a specimen such as serum therein, and has an upper opening. A plug 51 is provided in the upper opening. For example, a label is bonded and affixed to the outer peripheral side surface of the specimen container 50. A barcode as an information display unit indicating various types of information such as identification information of a specimen is displayed on the label.

The transfer devices 4 are disposed facing the openings at the rear ends of the plurality of conveying devices 2. For example, the transfer device 4 grips the specimen container 50 waiting at a transfer source or conveyed at the transfer source, and transfers the specimen container to the rack 24 disposed at the transfer position of the conveying device 2. For example, the transfer device 4 includes a plurality of transfer arms 201, a dummy rack 202, and a second transfer arm 203.

The transfer arm 201 includes an opening/closing mechanism unit 201a configured to be openable and closable, and a moving mechanism unit 201b that moves the opening/closing mechanism unit 201a in three axial directions, and grips and transfers the specimen container 50 at a standby position P0 to a dummy rack 202 that waits at a first relay position P1.

The dummy rack 202 includes a holder portion 202a that holds the specimen container 50 and a moving mechanism unit 202b that moves the holder portion 202a. The holder portion 202a is configured to be movable in three axes, for example, and holds the transferred specimen container 50 and moves to a second relay position P2 in the vicinity of a transfer position P3.

The second transfer arm 203 includes an opening/closing mechanism unit 203a configured to be openable and closable, and a moving mechanism unit 203b that moves the opening/closing mechanism unit 203a in three axial directions. The transfer arm 203 grips the specimen container 50 held by the dummy rack 202 at the second relay position P2 and inserts the specimen container into the rack 24 arranged in the last row of the conveying device 2 at the transfer position P3 (loading position and unloading position).

In the present embodiment, the number of objects to be stored in one row of the racks 24 and the specimen containers 50 are simultaneously held and transferred to the rack 24.

Note that the transfer source may be a conveyance line such as a conveyor mechanism of various processing apparatuses, or may be various racks on standby.

The control unit 5 includes a processing circuit such as a processor that controls the operation of each unit based on various data and calculation/determination results. Specifically, the control unit 5 operates the mechanisms of the drive units of the conveying device 2 and the transfer device 4 at a predetermined timing. For example, the control unit 5 may detect information about the IC tag 28 disposed at the bottom of the rack 24, may confirm the location of the rack 24, may detect information about an empty rack 24, and may perform processing and management of the specimen container 50 based on the detection information. For example, the control unit 5 detects and manages information on the specimen container 50 that has been stored in the storage apparatus and installed on the rack. For example, the control unit 5 can manage various statuses including a redetection target, a disposal target, and the like for each specimen container 50.

For example, the control unit 5 drives the drive units 26 of the plurality of conveying devices 2 to convey the feeding member 21 and move the rack 24 along the predetermined circulation path A.

In addition, the control unit 5 drives the transfer device 4 at a predetermined timing to perform transfer processing of gripping the specimen container 50 of the transfer source and loading the specimen container into the rack 24 in a last row of each conveying device 2.

Furthermore, the control unit 5 drives the transfer device 4 at a predetermined timing to perform transfer processing of gripping and unloading the specimen container 50 held by the rack 24.

Next, a storage method using the storage apparatus 100 according to the present embodiment will be described with reference to FIGS. 9 to 14.

The specimen storage method (specimen processing method) according to the present embodiment includes a forward movement step (ST1) of feeding the feeding member 21 forward along the circulation path A under the control of the control unit 5 to move the rack 24 forward in the upper lane, a downward movement step (ST2) of rotating and moving the rack 24 in the foremost row downward, a backward movement step (ST3) of sequentially moving the rack 24 downward in the lower lane, an upward movement step (ST4) of moving the rack 24 upward from the lower lane toward the upper lane, and a transfer step (ST5) of performing processing of loading or unloading the specimen container 50 into or from the rack 24 at the transfer position P3 by driving the transfer device **4.**

That is, the storage method includes: a transport processing of transporting the feeding member 21 along the loop-shaped circulation path to move the rack forward and backward in the forward path and the backward path, and moving the rack upward and downward at the connection portions at the end portions of the forward path and the backward path; and processing of loading or unloading the specimen container into or from the rack in the circulation path. As the operation of the storage apparatus 100, a circulating operation of moving the plurality of racks 24 in the circulation path A by the conveying device 2, and a transfer operation of loading or unloading the racks 24 at the transfer position by the transfer device 4 are performed at a predetermined timing, whereby each rack 24 is sequentially moved forward, moved downward, moved backward, loaded, or unloaded, moved upward.

In the forward movement step ST1, the plurality of racks 24 arranged in the front-rear direction is collectively moved forward in the upper lane.

In the downward movement step ST2, the support arm 23 holding the rack 24 in the foremost row of the upper lane rotates forward, so that the rack 24 moves downward and moves to the lower lane. At this time, the support arm 23 rotates with the feeding movement of the feeding member 21, but the rack 24 rotatably suspended by the support arm 23 moves along an arc-shaped track while maintaining the posture in which the opening edge faces upward.

In the backward movement step ST3, the plurality of racks 24 in the lower lane is collectively moved backward.

As the upward movement step ST4, the support arm 23 holding the rack in the lowermost row at the rear end is rotated to move the rack upward and move the rack to the upper lane. At this time, the support arm 23 rotates with the feeding movement of the feeding member 21, but the rack 24 rotatably suspended by the support arm 23 moves along the arc-shaped track while maintaining a posture in which the opening edge faces upward.

In addition, in the transfer step ST5, the control unit 5 performs loading processing of inserting one or more specimen containers 50 into the empty rack 24 in the last row and unloading processing of taking out one or more specimen containers 50 stored in the rack 24 in the last row.

As an example of the loading processing, for example, when the rack 24 arrives at the transfer position P3 on the way of moving upward by the rotation of the support arm 23, a plurality of, for example, up to 12 specimen containers 50 are simultaneously transferred to the rack 24 from the standby position P0 of the conveyor mechanism or the like by a dedicated chuck. Note that the rack 24 at the transfer position may be sent to the standby position P0 in an empty state in advance, or may be sent in a state where the specimen container 50 is contained. In a case where the specimen container 50 is contained in the rack 24 to be transferred in advance, the pre-processing of taking out the specimen container 50 from the rack 24 may be performed in parallel immediately before loading.

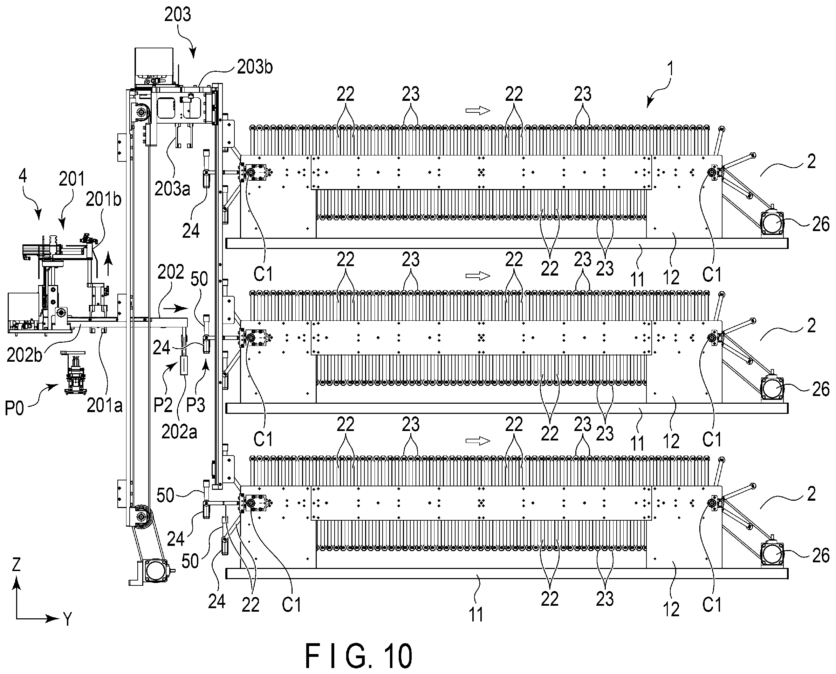

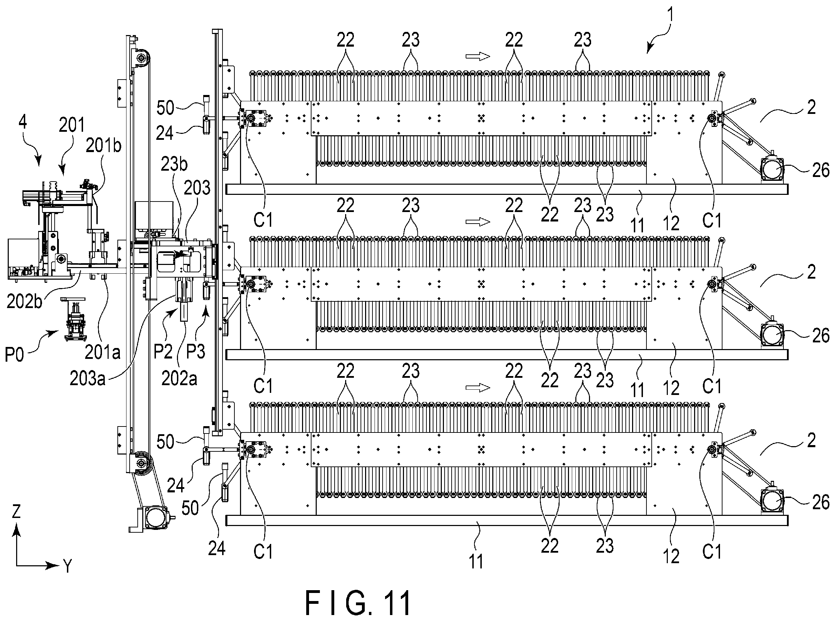

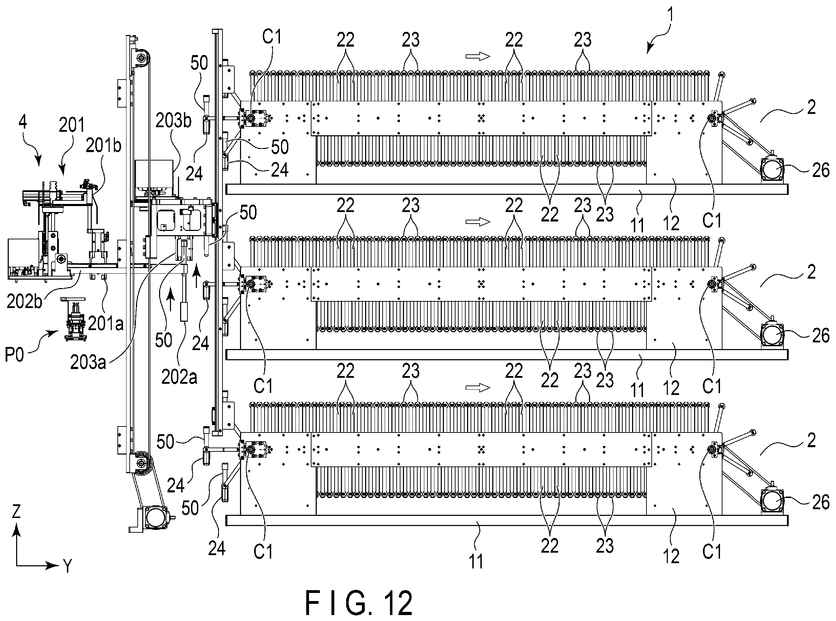

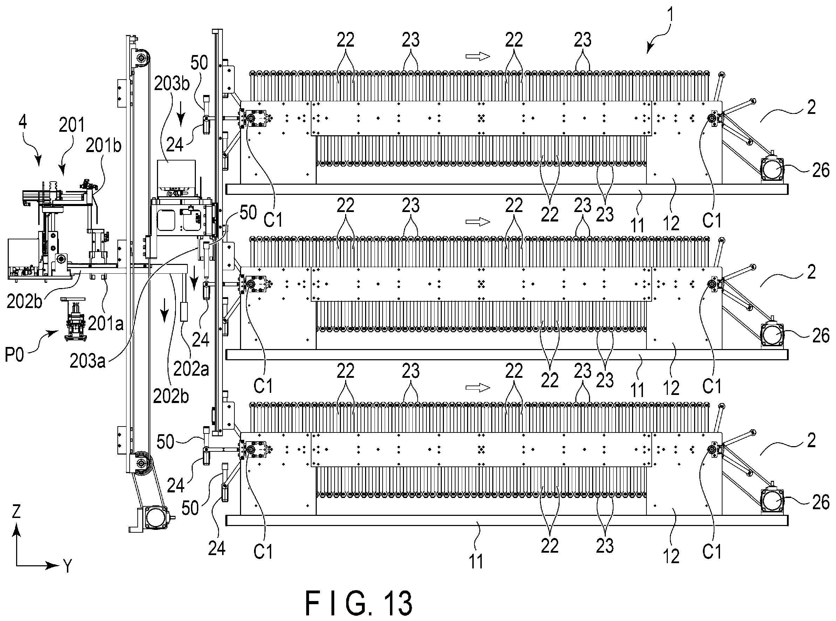

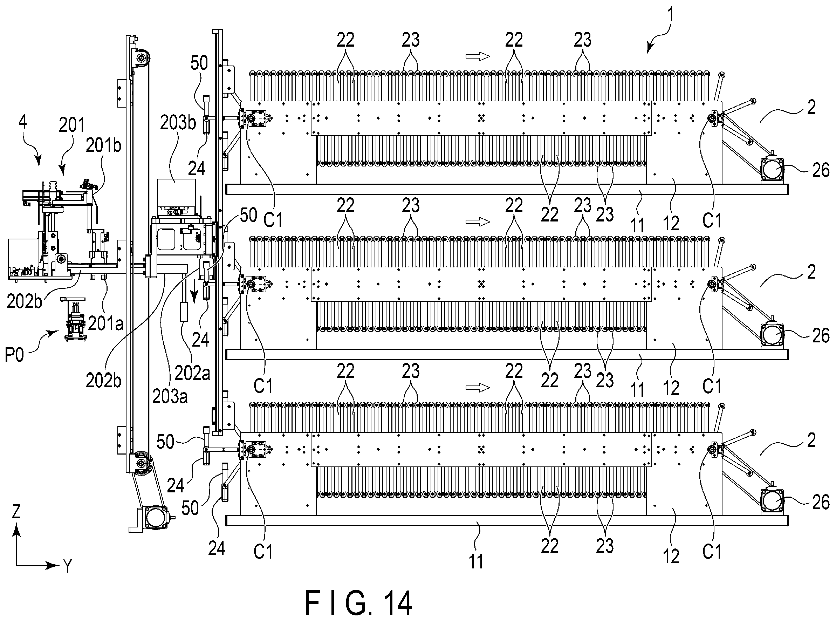

As a specific example, in the transfer step ST5, for example, in the case of the loading processing of loading the specimen container 50 at the standby position P0, which is the transfer source, into the empty rack 24, as illustrated in FIG. 9, the specimen container 50 at the standby position P0 is first transferred once to the dummy rack 202, which stands by at the first relay position P1, which is the standby position, by the first transfer arm 201, the dummy rack 202 is moved to the second relay position P2 as illustrated in FIG. 10, the specimen container 50 of the dummy rack 202 is gripped and pulled out as illustrated in FIG. 12 by the second transfer arm 203 as illustrated in FIG. 11, and the specimen container is inserted into the empty rack 24, which stands by at the transfer position P3 in the last line as illustrated in FIGS. 13 and 14.

As another example of the transfer step ST5, in the case of the unloading processing of moving the specimen container 50 held in the rack 24 to an unloading destination, first, the specimen container 50 of the rack 24 at the transfer position is gripped by the second transfer arm 203 and transferred to the dummy rack 202 at the second relay position P2, and after the dummy rack 202 is moved from the second relay position P2 to the first relay position P1, the specimen container 50 of the dummy rack 202 is gripped and transferred to the unloading destination.

For example, the transfer position is set at an intermediate position on the upward path. In this case, the conveyance is temporarily stopped at the transfer position in the middle of the upward movement processing, the transfer processing is performed, and the support arm is further rotationally moved toward the upper lane after the transfer processing is completed.

In the downward movement step and the upward movement step, the support arm 23 rotates about an axis C1 in the X direction and tilts, but since the rotating holder 233 is rotatable, it is possible to move the rack 24 upward and downward while maintaining the posture of the rack 24 in the posture in which the opening faces upward.

For example, at the time of storage, by repeating these forward movement, downward movement, backward movement, upward movement, and transfer a certain number of times, the specimen containers are sequentially transferred to the empty rack 24 one by one, and the containers 50 are transferred and then retracted, whereby the rack 24 is recovered into the storage space again. By going around circulation path A, containers 50 can be transferred and stored in all racks 24.

On the other hand, in the case of unloading the specimen container, the specimen container of the rack 24 is sequentially transferred to the transfer destination instead of loading, so that the unloading processing can be efficiently performed similarly to the loading processing.

In addition, the control unit 5 performs the movement processing of moving a specific specimen container 50 stored in storage toward a predetermined target position. For example, the control unit 5 receives an unloading instruction for the specific specimen container 50, and conveys the feeding member 21 so as to direct the rack 24 storing the specimen container 50 toward the transfer position.

The feeding direction of the feeding member 21 in the circulation path is not limited to the above.

According to the storage apparatus configured as described above, the storage processing of a large number of specimen containers 50 can be performed at high speed. That is, in the accommodation space in the storage apparatus 100, the conveying device having a mechanism capable of continuously circulating with a belt, a chain, or the like is provided, in such a way that the conveying device can smoothly move at a high speed.

In addition, since the holder that holds the rack 24 is configured to be rotatable with respect to the support arm, the specimen container 50 can be moved in the accommodation space of the upper and lower two stages while maintaining the upright posture of the specimen container 50 without impairing the upright property of the rack, and the inside of the housing can go around like a Ferris wheel while maintaining the upright posture of the rack 24.

For example, the storage apparatus 100 can hold and store 140 racks 24 per turn for each conveying device 2, and if 12 specimen containers 50 are contained in one rack 24, 1680 specimen containers can be stored. In a case where one conveying device 2 is 1680, the conveying devices 2 alone are arranged in three rows and two rows and mounted in one housing 1, so that the maximum storage number of 10080 can be stored in a space-saving manner. In addition, the circulation operation of the rack 24 can be shortened to, for example, an operation time of one round to about 1 minute.

In addition, an IC tag is installed in the rack 24 to manage information on the rack 24, so that the storage apparatus 100 can easily enter a stocker by checking the location and managing information about the empty rack 24, and can manage, for example, re-inspection and delivery, disposal, and the like by managing specimen information installed on the rack 24.

In the storage apparatus 100, the circulation operation is driven by a positionable manner such as a servo motor or a stepping motor to sequentially move the rack to a transfer place, the rack is moved along a circulation route passing through the transfer place, and the specimen is installed on the last surface of the storage shelf, so that a space for moving the transfer device on the rack top becomes unnecessary.

Note that the storage apparatus 100 can be moved to a position where the specimen container 50 designated by the user can be unloaded in addition to storing the specimen container 50. For example, by using a drive source such as a stepping motor, a feeding operation for each rack can be performed, and a continuous feeding operation can be supported. Therefore, any rack 24 in which any specimen is stored can be moved to a target position at a high speed and quickly moved according to the unloading instruction of the specimen stored in storage.

Note that the present invention is not limited to the above-described embodiments as they are, and can be embodied by modifying the components without departing from the spirit of the invention at the implementation stage.

For example, the specimen containers 50 stored in the housing of the storage apparatus may be of the same type, or may be configured to store specimen containers 50 of different types. For example, in the transfer device 4 of three floors, it is also possible to store different types of specimen containers 50 separately for each transfer device 4.

In the above embodiment, the loop-shaped circulation path A is set, but the moving path can be arbitrarily set. In the above embodiment, the transfer device 4 may be provided in, for example, a processing apparatus that performs various types of processing of the specimen container 50. In addition, the transfer source is, for example, the specimen container 50 mounted on the conveyor provided in the processing apparatus, but is not limited thereto. For example, a container loaded in another rack may be the target.

For example, the example in which the transfer device is transferred in two stages through the dummy rack has been described, but the present invention is not limited thereto, and the transfer device may be configured to be carried to the loading position by one transfer arm. In addition, the example in which one set of lanes whose moving directions are opposite to each other is set in two upper and lower stages, and three sets of conveying devices 2 are provided in two rows in the width direction in the vertical direction has been described, but the present invention is not limited thereto. In addition, the forward movement and the backward movement may be reversed, and the transfer position serving as the loading and unloading position may be set not at the rear end but at the front end or at another place. For example, the direction of the circulation operation and the positional relationship such as up, down, front, and back may be reversed.

In addition, in the above embodiment, the storage apparatus has been exemplified in which the specimen container 50 is sequentially loaded and stored by loading and unloading at one end side in the front-rear direction, but the present invention is not limited thereto. For example, various processing apparatuses that perform disposal of a specimen or other processing may be connected to any end portion to be unitized. For example, it is also possible to configure a disposal system that automatically discards the specimen as an unnecessary specimen in a case where a certain storage period elapses after the specimen is loaded into the storage apparatus.

In addition, each component exemplified in the above embodiment may be deleted, and the shape, structure, material, and the like of each component may be changed. Various inventions can be formed by appropriately combining a plurality of constituent elements disclosed in the above embodiment.

## Claims

1. A storage apparatus including a conveying device, the conveying device comprising:
a feeding member that moves along a predetermined circulation path having a forward path and a backward path;
a plurality of support arms supported by the feeding member; and
a plurality of racks rotatably supported by the support arms and capable of holding a specimen.

2. The storage apparatus according to claim **1,** wherein
the rack is capable of holding a plurality of specimens,
the storage apparatus further comprises a housing having an accommodation space for accommodating the plurality of racks, and
the circulation path includes the forward path and the backward path arranged vertically along a predetermined direction in the storage space, and a hoistway that connects the forward path and the backward path at an end.

3. The storage apparatus according to claim **2,** wherein
a plurality of rows of the conveying devices are provided in two directions intersecting the forward path and the backward path in the accommodation space in the housing,
the feeding member is a belt member or a chain member disposed along the circulation path having a loop shape, and
the support arm includes a rotating holder that is erected outward of the circulation path of the feeding member and rotatably suspends and supports the rack.

4. The storage apparatus according to claim 3, wherein
the rotating holder includes a rack support portion that engages with the rack, and
a length of the support arm from a base end connected to the feeding member to the rack support portion is larger than a height dimension of the rack.

5. A specimen processing apparatus comprising:
the storage apparatus according to any one of claims 1 to 4; and
a transfer device that loads or unloads a plurality of specimens into or from a rack arranged in the circulation path.

6. A specimen storage method comprising:
conveying a feeding member along a loop-shaped circulation path provided in an accommodation space for accommodating a plurality of racks capable of holding a specimen and having a forward path and a backward path to move the rack holding the specimen forward and backward in the forward path and the backward path, and moving the rack upward and downward at a connection portion connecting the forward path and the backward path at an end portion; and
performing loading or unloading the specimen into or from the rack in the circulation path.
